# EUROPÄISCHE PATENTSCHRIFT

(11) **EP 0 832 352 B1**
(45) Veröffentlichungstag und Bekanntmachung des Hinweises auf die Patenterteilung: **25.07.2001**
(21) Anmeldenummer: 96916074.6
(22) Anmeldetag: 14.05.1996
(51) Int. Cl.: F02M 35/10

(54) **ROHRMODUL**
PIPE MODULE
MODULE DE TUYAU

(30) Priorität: 13.06.1995 DE 19521025
(43) Veröffentlichungstag der Anmeldung: 01.04.1998
(73) Patentinhaber: FILTERWERK MANN & HUMMEL GmbH, 71631 Ludwigsburg (DE)
(72) Erfinder: MÜLLER, Heinz, D-71686 Remseck (DE); WALTENBERG, Klaus, D-71711 Murr (DE)
(74) Vertreter: Voth, Gerhard, Dipl.-Ing.
(86) Internationale Anmeldenummer: EP9602069
(87) Internationale Veröffentlichungsnummer: WO9641944

(56) Entgegenhaltungen:
- EP-A- 0 177 794
- EP-A- 0 448 431
- EP-A- 0 523 027
- EP-A- 0 595 696
- DE-A- 2 702 160
- DE-A- 4 403 219
- DE-A- 4 418 001
- US-A- 5 116 231

## Beschreibung

Die Erfindung betrifft ein Rohrmodul insbesondere im Ansaugtrakt einer Brennkraftmaschine, wobei das Rohrmodul wenigstens ein gekrümmtes Rohr aufweist, nach der Gattung des Patentanspruches 1.

Derartige Saugrohre sind bekannt. Zum Beispiel offenbart die US 5 116 231 ein solches Rohrmodul. Im Krümmungsbereich des Luftansaugstutzens ist ein Nebenschlußresonator angeordnet. Die Anordnung erfolgt entsprechend der Lehre dieses Dokumentes aufgrund geometrischer Anforderungen an die Anordnung, die mit dem Funktionsprinzip des Nebenschlußresonators, zum Beispiel der Länge des Resonatorhalses, zusammenhängen. Die geometrischen Anforderungen bewirken jedoch auch, daß der verwendete Resonator einen gewissen Bauraum einnimmt und daher nach verschiedenen Seiten über die Abmessungen des einzigen Ansaugkrümmers hinausragt. Der zusätzliche, durch den Resonator eingenommene Bauraum erschwert somit den Einbau der Ansaugvorrichtung in nachteilhafter Weise.

Eine andere Möglichkeit, ein Dämpfervolumen im Saugmodul unterzubringen, wird in der DE 27 02 160 beschrieben. Hier ist im Inneren der Ansaugvorrichtung ein Resonatorvolumen angeordnet, welches durch die verschiedenen Ansaugkanäle umschlungen ist. Hierdurch wird eine kompakte Bauform erzielt. Jedoch ist das Resonatorvolumen mit dem Ansaugweg des Saugmoduls in Reihe geschaltet. Eine solche Reihenschaltung schränkt die akustische Wirkung eines solchen Resonatorvolumens ein. Außerdem läßt sich die Dämpfercharakteristik des Resonatorvolumens nur mit hohem konstruktivem Aufwand beeinflussen. Daher ist die akustische Wirkung der Maßnahme gemäß der DE 27 02 160 begrenzt. Aufgabe der Erfindung ist es daher ein Rohrmodul zu schaffen, welches einen geringen Bauraum beansprucht und eine optimale Anpassung der akustischen Eigenschaften von im Rohrmodul angeordneten Dämpfervolumen ermöglicht. Diese Aufgabe wird durch die Merkmale des Patentanspruches 1 gelöst.

Das erfindungsgemäße Rohrmodul weist zwischen 2 und 6 gekrümmte Rohre auf. In deren Krümmungsbereich ist ein Nebenschlußresonator angeordnet, welcher nicht über die Gesamtabmessung des Saugrohrs hinausragt. Hierdurch kann der Nebenschlußresonator in besonders platzsparender Bauweise angeordnet sein. Weiterhin ist das im Krümmungsbereich angeordnete Dämpfervolumen als Nebenschlußresonator ausgeführt. Über die Länge des Resonatorhalses und das eingeschlossene Dämpfervolumen läßt sich auf unproblematische Weise die Dämpfercharakteristik dieses Nebenschlußresonators beeinflussen. Dadurch können auch nach Konstruktion des Saugrohres noch Modifikationen vorgenommen werden, wenn sich in der Testphase zeigt, daß bestimmte Ansauggeräuschanteile gedämpft werden müssen. Der Nebenschlußresonator kann zum Beispiel eine Schnittstelle aufweisen, mit deren Hilfe er an das Saugmodul angegliedert werden kann. Bei einer solchen Gestaltung läßt sich ein Baukastensystem für Saugmodule und verschiedene Nebenschlußresonatoren erzeugen, wodurch die Werkzeugkosten für das Baukastensystem wesentlich verringert werden können.

Eine vorteilhafte Weiterentwicklung der Erfindung sieht vor, daß das Funktionselement ein Dämpfervolumen ist. Durch die unmittelbare Anbringung des Funktionselements in der Gegend seines Wirkungsbereichs werden Verbindungswege, die bei einer ortsfernen Lösung notwendig sind, eingespart. Dies führt zu einem effinzienten Einsatz von Material, es reduzieren sich z.B. Strömungsverluste.

In einer anderen vorteilhaften Weiterbildung der Erfindung ist vorgesehen, daß das Funktionselement ein Ölabscheider insbesondere zur Kurbelgehäuseentlüftung ist. Durch die Montage des Funktionselements im Austrittssbereich der Kurbelgehäusegase entstehen kurze Wege, was zu effizientem Einsatz von Material und kompakten Strukturen führt.

Erfindungsgemäß ist in einer weiteren Ausgestaltung vorgesehen, daß das Funktionselement ein Nebenschlußresonator ist. Durch die unmittelbare Anbringung des Funktionselements in der Gegend seines Wirkungsbereichs werden Verbindungswege, die bei einer ortsfernen Lösung notwendig sind, eingespart. Dies führt zu einem effizienten Einsatz von Material, es entstehen kompakte Bauteile und es reduzieren sich z.B. ebenfalls die Strömungsverluste.

In einer vorteilhaften Weiterbildung der Erfindung ist vorgesehen, daß das Funktionselement eine Drosselklappe ist. Durch die unmittelbare Anbringung des Funktionselements in der Gegend seines Wirkungsbereichs werden Verbindungswege, die bei einer ortsfernen Lösung notwendig sind, eingespart. Dies führt zu einem effizienten Einsatz von Material, es entstehen kompakte Bauteile und es reduzieren sich z.B. ebenfalls die Strömungsverluste.

In einer anderen erfindungsgemäßen Weiterbildung ist vorgesehen, daß das Rohrmodul aus Kunststoff und/oder Metall besteht. Beide Materialien weisen vorteilhafte Eigenschaften hinsichlich der Belastungen im Einsatzfall auf und sind zusätzlich sehr variabel in der Verarbeitung zu handhaben. Beide Materialien lassen sich zum Beispiel in für die Massenfertigung vorteilhafter Weise mittels Gießverfahren verarbeiten.

Eine weitere vorteilhafte Weiterbildung der Erfindung sieht vor, daß das Rohrmodul zwei, drei, vier, fünf, sechs, acht, zehn oder zwölf Rohre aufweist. Durch diesen modulartigen Einsatz der Erfindung lassen sich gerade in der Massenfertigung Kostenvorteile erzielen.

Eine erfindungsgemäße Weiterbildung der Erfindung sieht vor, daß die Funktionselemente mittels Verbindungsanschlüssen mit der Brennkraftmaschine kommunizieren. Dadurch, daß die Funktionselemente gemäß ihrem Einsatzzweck in der erfindungsgemäßen Weise mit der Brennkraftmaschine Kommunizieren, werden sowohl kompakte Abmessungen als auch strömungsgünstige Verhältnisse geschaffen, was Platz spart und Kosten. Das Gesamtgewicht wird reduziert und so in Folge der Verbrauch.

Eine andere erfindungsgemäße Weiterbildung sieht vor, daß die Funktionselemente im Rohrmodulgehäuse integriert sind. Durch die Integration der Funktionselemente in das Gehäuse des Rohrmoduls können vorteilhafterweise z.B. Gehäusewandungen und Kommunikationswege eingespart werden und somit in Folge Gewicht und Kosten. Das Rohrmodul wird auf diese Weise noch kompakter, leichter und billiger.

In einer erfindungsgemäßen Weiterbildung ist vorgesehen, daß das Funktionselement ein Einspritzventil ist. Neben dem Effekt, daß das Rohrmodul noch kompakter wird, liegt ein weiterer Vorteil in der Tatsache, daß die Problematik der Verschmutzung der Einspritzventile gar nicht mehr auftaucht und somit in Folge auch die daraus resultierenden Probleme.

In einer anderen Weiterentwicklung der Erfindung ist vorgesehen, daß das Funktionselement eine Energieleiste oder eine elektrische Regeleinheit ist. Durch die Integration der gesamten Steuer- bzw. Regelvorrichtung der Einspritzanlage in das Rohrmodul wird das Rohrmodul noch wesentlich kompakter, leichter und billiger.

Eine weitere erfindungsgemäße Weiterentwicklung sieht vor, daß die Funktionselemente elastisch undschwingungsfrei aufgehängt sind. Der Vorteil dieser Art der Befestigung liegt im geräuscharmen und sicheren Betrieb hinsichtlich der Frage der Bauteilfestigkeit.

Vorteilhafte Weiterbildungen der Erfindung ergeben sich aus den Unteransprüchen.

Diese und weitere Merkmale von bevorzugten Weiterbildungen der Erfindung gehen außer au den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. Die Zeichnungen zeigen:
- Figur 1: Rohrmodul-Seitenansicht,
- Figur 2: Schnitt durch den Ölabscheider aus Figur 1,
- Figur 3: Rohrmodul-Seitenansicht mit Nebenschlußresonator,
- Figur 4: Rohrmodul-Vorderansicht,
- Figur 5: Rohrmodul-Seitenansicht mit Einspritzdüse, Energieleiste und Nebenschlußresonator,
- Figur 6: Rohrmodul-Seitenansicht wie in Figur 5, jedoch mit außen liegender Einspritzdüse und Energieleiste,
- Figur 7: Rohrmodul-Seitenansicht mit Ölabscheider, Nebenschlußresonator, Einspritzdüste und Energieleiste.

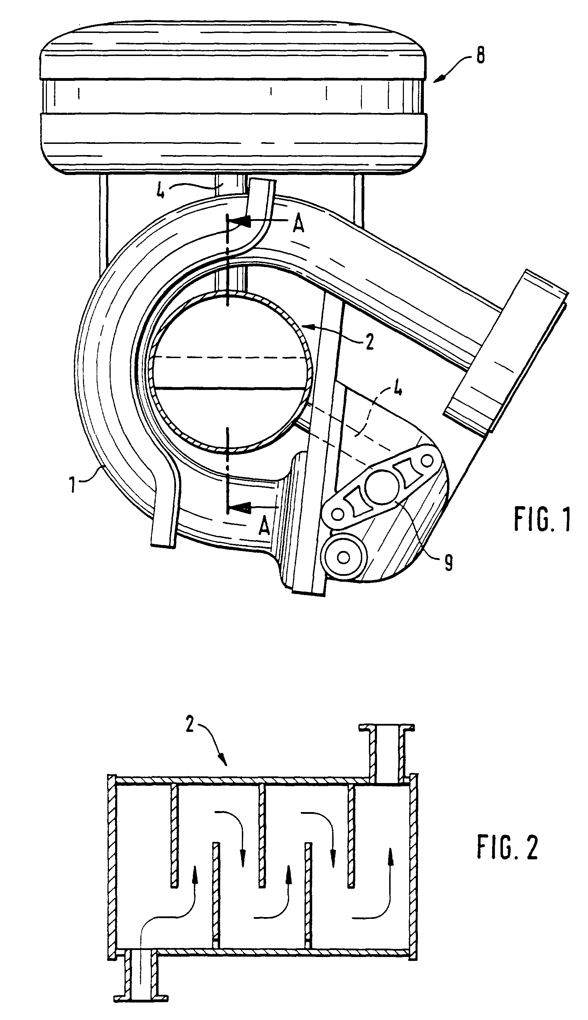

In Figur 1 wird ein Rohrmodul dargestellt, in dessen inneren Krümmungsbereich ein Ölabscheider angeordnet ist. Dieser Ölabscheider ist in diesem Ausführungsbeispiel das Funktionselement, das mittels der Verbindungsanschlüsse 4 mit der nicht dargestellten Kurbelgehäuseentlüftung und dem Luftfiltergehäuse 8 kommuniziert. Weiter weist das Rohrmodul einen Anschluß zur Abgasrückführung 9 auf.

In Figur 2 wird der Ölabscheider aus Figur 1 im Schnitt dargestellt. Die Pfeile in Figur 2 deuten den Strömungsverlauf des durchtretenden Gases an.

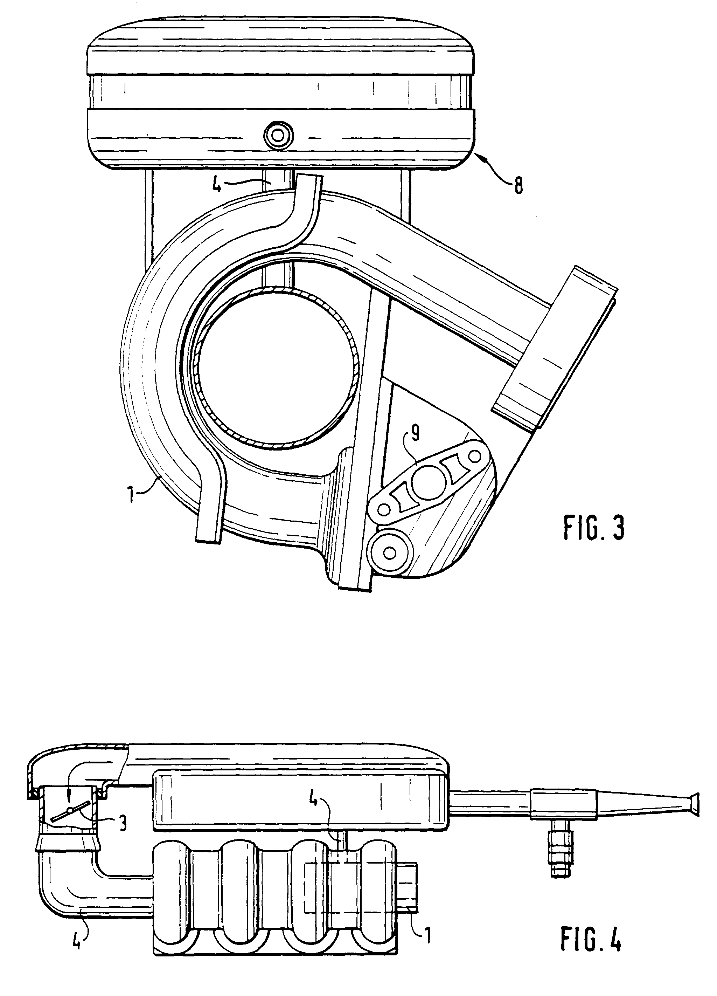

Ein Rohrmodul wird in Figur 3 dargestellt, das im Innenbereich des oder der gekrümmten Rohre 1 einen Nebenschlußresonator 7 aufweist. Dieser Nebenschlußresonator 7 kommuniziert mit der Brennkraftmaschine mittels Verbindungsleitung 4 und dem Luftfiltergehäuse 8.

Die Anordnung verschiedener Funktionselememte wie die von Drosselklappe 3 und Nebenschlußresonator 7 wird in Figur 4 dargestellt. Diese Funktionselemente kommunizieren mittels Verbindungsanschluß 4 mit der Brennkraftmaschine.

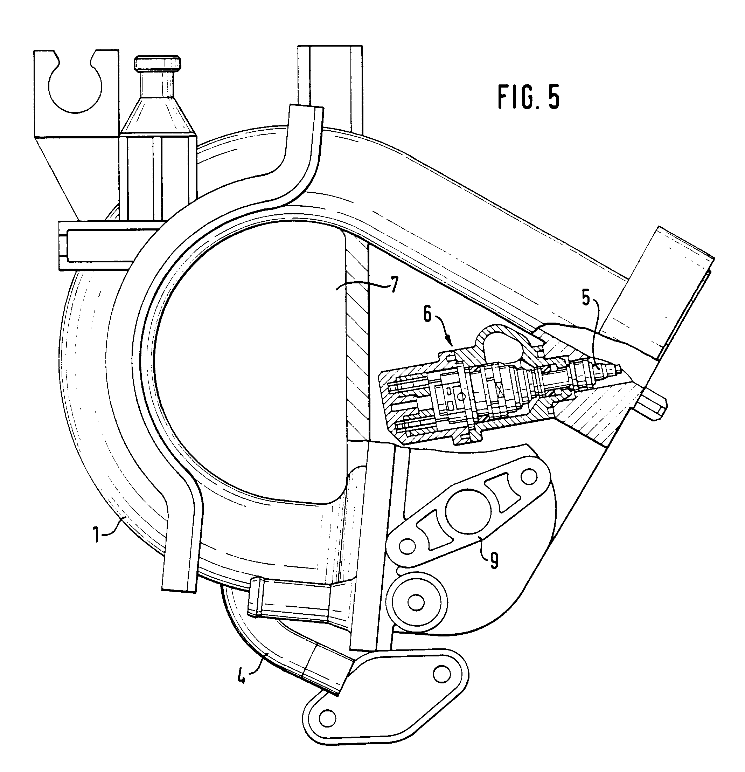

Figur 5 stellt die Anordnung der Funktionselemente Einspritzventil 5 bzw. einerEnergieleiste 6 mit integriertem Einspritzventil 5 und Nebenschlußresonator 7 innerhalb des Krümmungsbereichs des Rohrmodules dar. Dieses Ausführungsbeispiel verfügt ebenfalls über die zur Kommunikation mit der Brennkraftmaschine notwendigen Verbindungsanschlüsse 4 sowie über ein Anschluß zur Abgasrückführung 9.

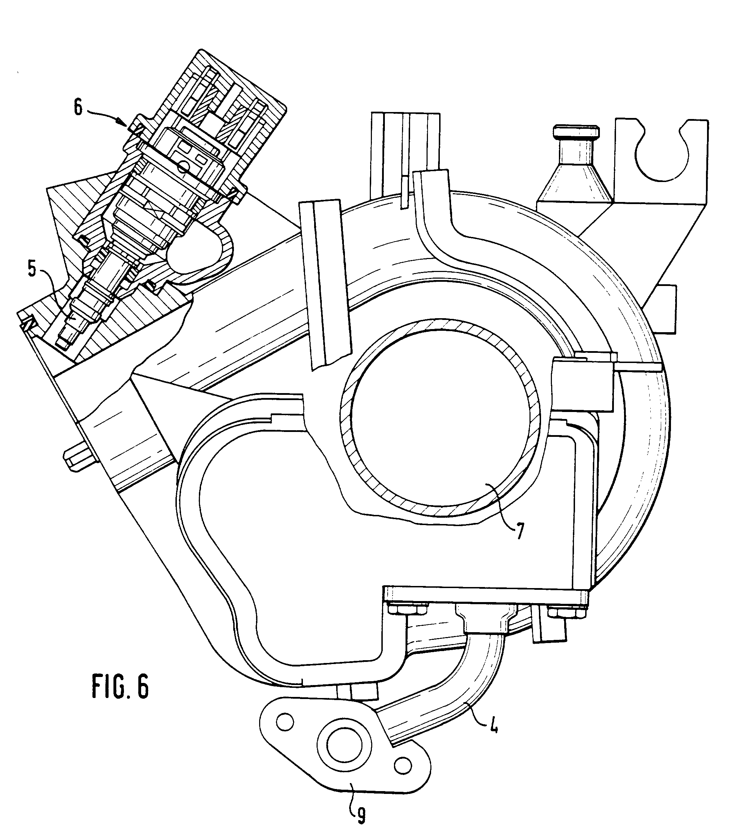

In einer Abwandlung von Figur 5 zeigt sich in Figur 6, die Anordnung von Einspritzventil 5 und Energieleiste 6 an der Außenseite des Krümmungsbereiches des Rohrmodules.

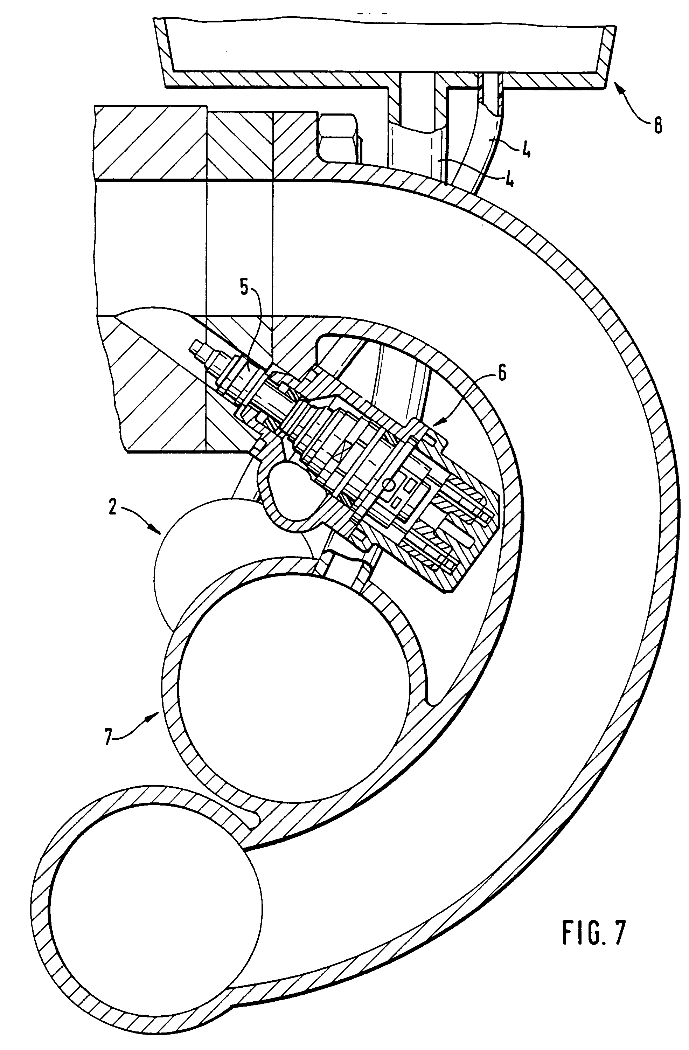

In Figur 7 wird die kompakte Anordnung aller bisher genannten Funktionselemente dargestellt. Sowohl Einspritzventil 5, Energieleiste 6, Nebenschlußresonator 7 und Ölabscheider 2 sind im Krümmungsbereich, insbesondere innerhalb desselben angeordnet. Die Kommunikation der Funktionselemente wird mittels der Verbindungsanschlüsse 4 realisiert.

## Patentansprüche

1. Rohrmodul im Ansaugtrakt einer Brennkraftmaschine, wobei das Rohrmodul zwischen zwei und sechs gekrümmte Rohre (1) aufweist, wobei im Krümmungsbereich innerhalb desselben wenigstens ein Funktionselement in Form eines Dämpfervolumens angeordnet ist, dadurch gekennzeichnet, daß das Funktionselement ein Nebenschlußresonator (7) ist.

2. Rohrmodul nach Anspruch 1, dadurch gekennzeichnet, daß die Funktionselemente im Rohrmodulgehäuse integriert sind.

3. Rohrmodul nach Anspruch 1, dadurch gekennzeichnet, daß als weiteres Funktionselement ein Einspritzventil (5) innerhalb des Krümmungsbereiches der Rohre (1) vorgesehen ist.

4. Rohrmodul nach einem oder mehreren der vorgenannten Ansprüche, dadurch gekennzeichnet, daß die Funktionselemente elastisch, schwingungsfrei aufgehängt sind.

## Claims

1. Pipe module in the intake duct of an internal combustion engine, the pipe module having between two and six curved pipes (1), at least one operational component part - in the form of a damping volume - being disposed in the region of curvature internally thereof, characterised in that the operational component part is a bypass resonator (7).

2. Pipe module according to claim 1, characterised in that the operational component parts are incorporated in the pipe module housing.

3. Pipe module according to claim 1, characterised in that an injection valve (5) is provided as an additional operational component part within the region of curvature of the pipes (1).

4. Pipe module according to one or more of the aforesaid claims, characterised in that the operational component parts are mounted resiliently, in a non-oscillating manner.

## Revendications

1. Module tubulaire monté dans une ligne d'admission d'un moteur à combustion interne, comprenant de deux à six tubes recourbés (1), et, à l'intérieur de la zone entourée par les parties courbées des tubes, au moins un élément fonctionnel ayant la forme d'un volume d'amortissement,
caractérisé en ce que
l'élément fonctionnel est un résonateur en dérivation.

2. Module tubulaire selon la revendication 1,
caractérisé en ce que
les éléments fonctionnels sont intégrés au boîtier du module tubulaire.

3. Module tubulaire selon la revendication 1,
caractérisé en ce qu'
il est prévu comme autre élément fonctionnel, un injecteur (5) monté à l'intérieur de la zone entourée par les parties courbes des tubes (1).

4. Module tubulaire selon une ou plusieurs des revendications précédentes,
caractérisé en ce que
les éléments fonctionnels sont suspendus élastiquement, sans vibration.
